# EUROPEAN PATENT SPECIFICATION

(11) **EP 2 165 247 B1**
(45) Date of publication and mention of the grant of the patent: **27.04.2011**
(21) Application number: 07822778.2
(22) Date of filing: 21.11.2007
(51) Int. Cl.: G06F 3/02, G06F 3/023, G06F 3/041, G06F 3/01, G06F 3/048, G06F 3/033

(54) **DATA INPUT DEVICE AND PORTABLE ELECTRONIC DEVICE**
DATENEINGABEEINRICHTUNG UND TRAGBARES ELEKTRONISCHES GERÄT
DISPOSITIF D'ENTRÉE DE DONNÉES ET DISPOSITIF ÉLECTRONIQUE PORTABLE

(30) Priority: 28.06.2007 US 770308
(43) Date of publication of application: 24.03.2010
(73) Proprietor: Sony Ericsson Mobile Communications AB, 221 88 Lund (SE)
(72) Inventor: KLINGHULT, Gunnar, S-LUND Se-22359 (SE); KLEVERMAN, Mats, S-SE-25443 Helsingborg (SE); JENDBRO, Magnus, S-SE-245 61 Staffanstorp (SE)
(74) Representative: VALEA AB
(86) International application number: PCT/EP2007/062640
(87) International publication number: WO 2009/000336

(56) References cited:
- US-A1- 2002 084 989
- US-A1- 2003 098 845
- US-A1- 2003 231 197
- US-B1- 7 034 802

## Description

### TECHNICAL FIELD OF THE INVENTION

The present invention relates to the field of portable electronic devices and more particularly to the provision of a data input device and a portable electronic device including a data input device.

### DESCRIPTION OF RELATED ART

Portable electronic devices like cellular phones are becoming smaller and smaller in size. This also leads to the reduction in size of elements provided on them such as keys and keypads. This also means that it may be hard for users to input data. A user of a portable communication device may furthermore not need to use all the keys that are provided. It would then be advantageous to enable a user to use the keys of interest in a simple manner, without him/her having to look at a keypad in order to select the keys to use.

There has recently evolved materials of a type that change shape based on applied electrical voltages. These materials are known as electroactive polymers. These materials have been suggested for use in for instance the field of biomimetics.

U.S. Patent Application US2003098845 discloses a display system including a processor. The display system also includes a first display device having a first display surface and receiving display data from the processor. The display system also includes a second displayed device having a display area smaller then the first display device and moveable over the surface of the first display device. The display system also includes a sensor in communication with the processor and communicating location data to the processor. The location data is representative of the relative location of the first display to the second display. Further still, the display system includes a program running on the processor and providing display data to the first and second display devices. The display data is provided to the second display device based on the location data.

U.S. Patent Application US2002084989 discloses a keyboard apparatus including a fabric and switch units coupled to the fabric. Each switch unit includes a capsule containing an electrically responsive liquid, wherein the electrically responsive liquid causes the capsule to increase in rigidity in response to application of an electric field to the electrically responsive liquid. Each switch unit also includes one or more switches coupled to the capsule, wherein a selected pressure applied to the capsule activates or more of the switches underneath the capsule. The keyboard apparatus also contains electrical conducting lines connected to the switch units.

U.S. Patent Application US2003231197 discloses a control panel for an electrical/electronic device allowing a user to use the control panel without looking at the control panel. The control panel is formed by a graphic user interface (GUI) having a display for displaying various control icons for controlling the device. The display is touch sensitive so that a user is able to select the control function by pressing on the appropriate control icon. The display further has touch detectability for enabling a user to distinguish between the icons by touch. The touch detectability may be in the form of the surface of the display having raised portion in the vicinity of the control icons. While the positioning of the raised portions may be fixed, to allow for changing layouts of the control icons, the display may be flexible and an array of actuators may underlie the display whereby the actuators arc selectively activated to press against the underside of the display thereby raising the upper surface of the display in the vicinities of the control icons.

U.S. Patent US7034802 discloses a portable computer system contained within a housing that comprises an electronic muscle material for performing a plurality of functions. The electronic muscle can be used to replace buttons or keys used in many PDAs. The movement of the electronic muscle material can charge the battery. When handled, the electronic muscle material can further detect the left- or right-handedness of the user and, based on the handedness, can generate function buttons or other alterations to accommodate the user's hand preference and finger placement. The electronic muscle can change shape to accommodate the user's hand for comfort and, further, as a security function to identify and authorize the user. Additionally, the electronic muscle material in the housing can be caused to vibrate at given frequencies so that it can generate an alarm and can function as a speaker or a dynamically directional microphone.

### SUMMARY OF THE INVENTION

The present invention is therefore directed towards using an electroactive polymer in a data input device in order to enable the provision of keys that can be raised in relation to the environment in which they are provided.

A first aspect of the present invention is directed towards a data input device comprising: a key sensing mechanism,
a solid material layer provided directly above directly said key sensing mechanism, wherein said solid material layer includes a least one cavity going through the whole of said solid material layer,
wherein said cavity comprises an electroactive polymer and two electrodes for providing a key that can be changed In shape based on an applied voltage and register inputs in the key sensing mechanism based on a user pressing down the electroactive polymer on the key sensing mechanism.

A second aspect of the present invention is directed towards a data input device including the features of the first aspect, wherein the electroactive polymer and the key sensing mechanism are transparent.

A third aspect of the present invention is directed towards a data input device including the features of the second aspect, further comprising a display below said key sensing mechanism.

A fourth aspect of the present invention is directed towards a data input device including the features of the first aspect, wherein said solid material layer comprises a number of cavities, each having electroactive polymer and electrodes.

A fifth aspect of the present invention is directed towards a data input device including the features of the fourth aspect, wherein the cavities are provided in a structure and the key sensing mechanism is arranged to detect a key press through providing data indicating a position in the structure based on pressure applied by the electroactive polymer of a cavity on an area in the key sensing mechanism.

A sixth aspect of the present invention is directed towards a data input device including the features of the first aspect, wherein the electroactive polymer is an ionic electroactive polymer.

A seventh aspect of the present invention is directed towards a data input device including the features of the first aspect, further comprising an elastic shielding layer above said solid material layer and covering said cavity.

An eighth aspect of the present invention is directed towards a data input device including the features of the first aspect, wherein the electroactive polymer is surrounded by a gel formed electrolyte.

A ninth aspect of the present invention is directed towards a data input device including the features of the first aspect, wherein the electrodes are provided opposite each other on the walls of the cavity.

A tenth aspect of the present invention is directed towards portable electronic device comprising:
a data input device according to any of aspects 1-9.

An eleventh aspect of the present invention is directed towards a portable electronic device including the features of the tenth aspect, further comprising a control unit arranged to receive location detection data from the key sensing mechanism corresponding to a pressing down of the electroactive polymer in a cavity on the key sensing mechanism and providing a voltage to be applied on the electrodes of the electroactive polymer in a cavity based on this pressing down in order to change the shape of the electroactive polymer in question.

A twelfth aspect of the present invention is directed towards a portable electronic device including the features of the tenth or eleventh aspect, wherein it is a portable communication device.

A thirteenth aspect of the present invention is directed towards a portable electronic device including the features of the twelfth aspect, wherein it is a cellular phone.

The invention has the following advantages. It allows the shape of keys to be changed, which enables a user to more easily locate and use a key that is of interest for him/her to use. This also provides him/her with tactile feedback of the key.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a front view of a portable electronic device in the form of a cellular phone having a data input device according to the present invention,
fig. 2 schematically shows a side view of the data input device provided above a display, and
fig. 3 schematically shows a side view of one key provided in the data input device in a normal non-raised mode,
fig. 4 schematically shows a side view of said key provided in the data input device in a raised mode, and
fig. 5 shows a block schematic of units in the portable electronic device provided in order to raise a key in the data input device.

### DETAILED DESCRIPTION OF EMBODIMENTS

A portable electronic device according to the present invention will now be described in relation to a cellular phone, which is a preferred variation of such a device. The portable electronic device may be a portable communication device of some other type, like a cordless phone, a communication module, a PDA or any other type of portable device communicating with radio waves. It can also be a gaming machine, a notepad or any other type of portable electronic device.

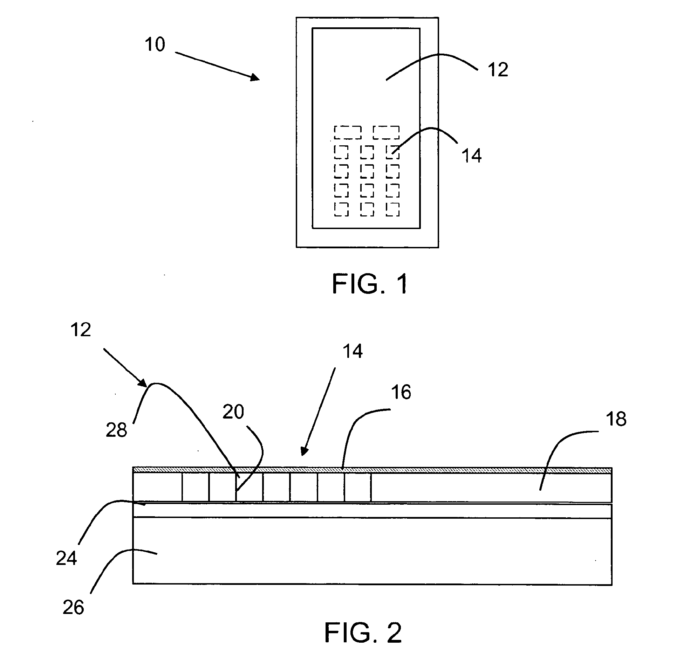

Fig. 1 schematically shows a front view of a phone according to a first embodiment of the present invention. The phone 10 includes display 12. The display 12 here includes an area where a data input device 14 in the form of a keypad is provided. When the data input device 14 is touched in an area where a key is provided, information corresponding to this key is registered by the data input device 14 and entered into the phone 10. The data input device 14 does here have a special configuration, which will be described shortly.
Fig. 2 schematically shows a side view of the structure of an embodiment of a data input device 14 according to the invention. The device 14 includes a transparent elastic shielding layer 16 having an upper side facing the exterior of the phone. This layer is flexible and may be provided through silicone. This layer 16 is thus the part of the phone that a user touches when entering information. The shielding layer 16 has a bottom side attached to an upper side of a solid material layer 18. The solid material layer may be made of a solid plastics material like PET. The solid material layer 18 includes a number of cavities 20, where there is a cavity 20 provided for each key in the keypad that is to be provided. Each cavity 20 here goes through the whole of the solid material layer 18. Each such cavity 20 is also filled with an electroactive polymer 28. Below the solid material layer 18 there is provided a key sensing mechanism that is here a touch input sensing layer combination 24, which may be provided through a resistive or a capacitive touch panel. In the case of a resistive touch panel this combination is provided through a first elastic electrically conducting layer and a second electrically conducting layer that are distanced from each other. These may both be provided in the form of ITO films. Each cavity 20 is thus formed as a box bounded by walls provided through the solid material layer 18, a bottom provided by the touch input sensing layer combination 24 and a top provided by the shielding layer 16. The bottom, which is here made up of the first elastic electrically conducting layer of the touch input sensing layer combination 24, is here less flexible than the shielding layer 16, i.e. it is not as elastic as the shielding layer 16. The cavities 20 with electroactive polymers 28 and the touch input sensing layer combination 24 thus form a keypad with a number of keys. Below the touch input sensing layer combination 24 there is here provided a display 26, which may with advantage be a liquid crystal display in order to display information relating to the keys.

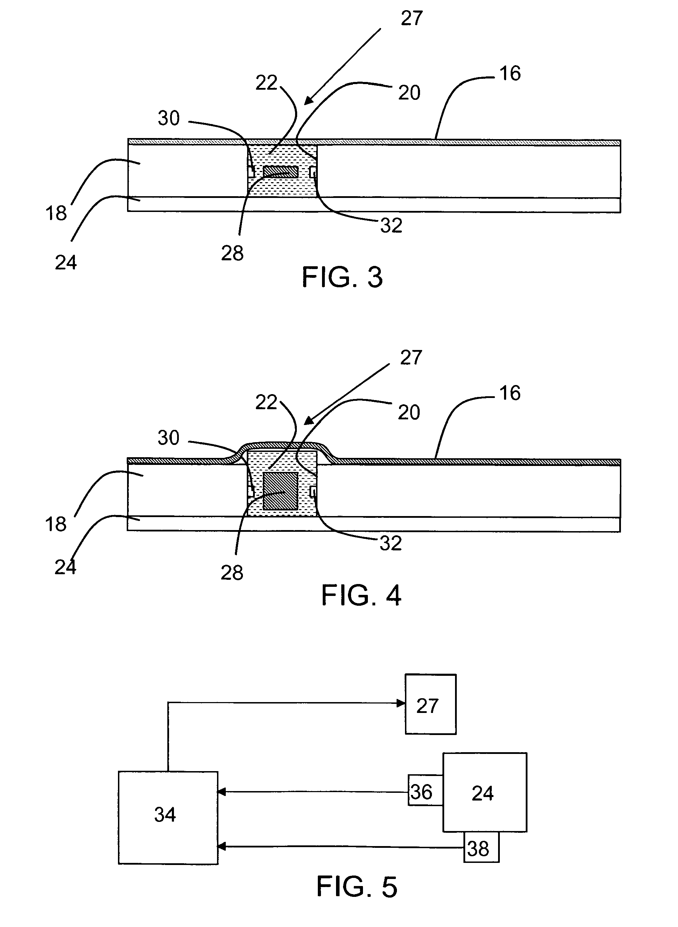

Fig. 3 and 4 schematically show side views of one key 27 provided in the data input device in a normal non-raised mode as well as in a raised mode, which will be used for describing the principles of the present invention. The cavity 20 is as was mentioned before filled, and may be completely filled, with an electroactive polymer 28. This polymer 28 is preferably provided in gel form and is here surrounded by an electrolyte 22 that is also in the form of a gel. The electrolyte 28 is here provided as a shell in order to protect the electroactive polymer 28. In the cavity 20 there is furthermore provided a first and a second electrode 30 and 32, where the first electrode 30 is here connected to one of the walls of the cavity 20, while the second is here connected to a second opposing wall. Therefore these electrodes 30 and 32 are provided opposite each other. By applying a voltage between these two electrodes 30 and 32, the electroactive polymer 28 reacts and changes its shape. Because the shielding layer 16 is more flexible than the bottom of the cavity and the walls are solid, the change in shape will be made only in relation to this shielding layer 16, which will lead to the polymer 28 expanding or contracting and thus raising or lowering the flexible shielding layer 16 so that a raised or lowered key 27 is provided.

In this way a raised key 27 may be provided, which enables a user to more easily locate and use the key that is of interest for him/her to use. This is of advantage in keypads that are small and where the number of different keys are many. This also provides a user with tactile feedback of the key.

The electroactive polymer is with advantage an ionic electroactive polymer such as an Ionic Polymer Gel. However it may also be an lonomeric Polymer-Metal Composite or a Carbon Nanotube.

In order to provide an example of use of the electroactive polymer according to the present invention reference is now being made to fig. 5, which shows a block schematic of units in the portable electronic device that are provided in order to raise or lower a key in the data input device.

Here there is shown a control unit 34, which is connected to the touch input sensing combination 24 via detecting elements 36 and 38 as well as to the cavities, here indicated by the single key 27 mentioned above.

As a user presses a key on the keypad, for instance key 27, the electroactive polymer and surrounding electrolyte is forced down on an area of the underlying touch input sensing layer combination 24 that is aligned with the cavity through user pressure applied on the shielding layer above a cavity. This causes the electroactive polymer and surrounding electrolyte in the cavity to exert pressure on the touch input sensing layer combination 24, where in the case of a resistive touch panel, the two electrically conducing layers are making contact with each other. The position in a structure, often a matrix provided in the layer is then detected by the detection elements 36 and 38. These elements 36 and 38 may be arranged to detect the position according to columns and rows. Location detection data regarding the position in the structure is then provided to the control unit 34. Here it is for instance possible that the selection is being made in relation to a music playing function of the device. The control unit 34 then recognises the position and determines which selection has been made. In relation to this selection it then decides to raise one or more of the keys associated with the selected function, for instance a key that is to provide a PLAY button. The control unit 34 therefore locates the key that is to be a PLAY button and provides a voltage signal to be provided to the electrodes of the electroactive polymer in the cavity which is to act as the key 27. This may in turn raise the key 27 and now it can be used more easily by the user of the device, since it has been raised in relation to the environment, i.e. in relation to the surface of the phone as well as in relation to at least some of the keys of the keypad.

It should here be realised that the data input device need not be provided in relation to a display, but can be provided on its own. Naturally it is then not necessary with transparent layers, which would be the case if the device of the present invention would be provided for use in a touch screen.

It is furthermore possible that there are different modes, where some keys in a keypad may be raised while others are not. In one mode no keys may be raised. It is also possible to lower keys that should not be used. It is also possible to combine the raising of keys with illumination so that a user can more easily determine which keys he/she should use. There may also be provided domes between touch input combination and cavities, where the electroactive polymer acts on the dome, which in turn acts on the key sensing mechanism. In this case it should also be realised that the key sensing mechanism need not be provided through a touch input sensing layer combination, but other mechanisms may be used.

It is furthermore possible with flexible walls of the cavity so that expansion can take place sideways. In this way it is possible to enlarge the size of a key sideways. Depending on the nature of the electroactive polymer the cavity may furthermore only be filled with electroactive polymer without any surrounding electrolyte.

It should also be realised that in the data input device there may be spacer layers provided between the solid material layer and the key sensing mechanism as well as between the key sensing mechanism and the display layer. Therefore it should be realised that the present invention is only to be limited by the following claims.

## Claims

1. Data input device (14) comprising a key sensing mechanism (24), the data input device (14) **characterized in that**:
a solid material layer (18) is provided directly above said key sensing mechanism (24), wherein said solid material layer (18) includes a least one cavity (20) going through the whole of said solid material layer (18), and
wherein said cavity (20) comprises an electroactive polymer (28) and two electrodes (30, 32) for providing a key (27) that can be changed in shape based on an applied voltage and register inputs in the key sensing mechanism (24) based on a user pressing down the electroactive polymer (28) on the key sensing mechanism (24).

2. Data input device (14) according to claim 1, wherein the electroactive polymer (28) and the key sensing mechanism (24) are transparent.

3. Data input device (14) according to claim 2, further comprising a display (26) below said key sensing mechanism.

4. Data input device (14) according to any previous claim, wherein said solid material layer (18) comprises a number of cavities, each having electroactive polymer and electrodes.

5. Data input device (14) according to claim 4, wherein the cavities (20) are provided in a structure and the key sensing mechanism (24) is arranged to detect a key press through providing data indicating a position in the structure based on pressure applied by the electroactive polymer (28) of a cavity (20) on an area in the key sensing mechanism (24).

6. Data input device (14) according to any previous claim, wherein the electroactive polymer (28) is an ionic electroactive polymer.

7. Data input device (14) according to any previous claim, further comprising an elastic shielding layer (16) above said solid material layer (18) and covering said cavity (20).

8. Data input device (14) according to any previous claim, wherein the electroactive polymer (28) is surrounded by a gel formed electrolyte (22).

9. Data input device (14) according to any previous claim, wherein the electrodes (30, 32) are provided opposite each other on the walls of the cavity (20).

10. Portable electronic device (10) comprising a data input device (14) according to any of claims 1-9.

11. Portable electronic device (10) according to claim 10, further comprising a control unit (34) arranged to receive location detection data from the key sensing mechanism (24) corresponding to a pressing down of the electroactive polymer in a cavity on the key sensing mechanism and providing a voltage to be applied on the electrodes of the electroactive polymer in a cavity based on this pressing down in order to change the shape of the electroactive polymer in question.

12. Portable electronic device (10) according to claim 10 or 11, wherein it is a portable communication device.

13. Portable electronic device (10) according to claim 12, wherein it is a cellular phone.

## Patentansprüche

1. Dateneingabegerät (14), umfassend einen Tastenerkennungsmechanismus (24), wobei das Dateneingabegerät (14) **dadurch gekennzeichnet ist, dass**:
eine Massivmaterialschicht (18) direkt über dem Tastenerkennungsmechanismus (24) bereitgestellt ist, wobei die Massivmaterialschicht (18) mindestens eine Aussparung (20) beinhaltet, welche durch die gesamte Massivmaterialschicht (18) geht, und
wobei die Aussparung (20) ein elektro-aktives Polymer (28) und zwei Elektroden (30, 32) umfasst zum Bereitstellen einer Taste (27), welche in der Form geändert werden kann basierend auf einer angelegten Spannung und Eingaben in dem Tastenerkennungsmechanismus (24) registriert basierend auf einem Herunterdrücken des elektro-aktiven Polymers (28) auf dem Tastenerkennungsmechanismus (24) durch einen Benutzer.

2. Dateneingabegerät (14) nach Anspruch 1, wobei das elektro-aktive Polymer (28) und der Tastenerkennungsmechanismus (24) transparent sind.

3. Dateneingabegerät (14) nach Anspruch 2, ferner umfassend eine Anzeige (26) unter dem Tastenerkennungsmechanismus.

4. Dateneingabegerät (14) nach einem der vorangehenden Ansprüche, wobei die Massivmaterialschicht (18) eine Zahl von Aussparungen umfasst, welche jeweils elektro-aktive Polymere und Elektroden aufweisen.

5. Dateneingabegerät (14) nach Anspruch 4, wobei die Aussparungen (20) in einer Struktur bereitgestellt sind und der Tastenerkennungsmechanismus (24) eingerichtet ist, um einen Tastendruck durch Bereitstellen von Daten zu erfassen, die eine Position in der Struktur angeben basierend auf Druck ausgeübt durch das elektro-aktive Polymer (28) von einer Aussparung (20) in einem Bereich in dem Tastenerkennungsmechanismus (24).

6. Dateneingabegerät (14) nach einem der vorangegangenen Ansprüche, wobei das elektro-aktive Polymer (28) ein ionisches elektro-aktives Polymer ist.

7. Dateneingabegerät (14) nach einem der vorangegangenen Ansprüche, ferner umfassend eine elastische Schutzschicht (16) über der Massivmaterialschicht (18) und die Aussparung (20) abdeckend.

8. Dateneingabegerät (14) nach einem der vorangegangenen Ansprüche, wobei das elektro-aktive Polymer (28) durch ein Gel-gebildetes Elektrolyt (22) umgeben ist.

9. Dateneingabegerät (14) nach einem der vorangegangenen Ansprüche, wobei die Elektroden (30, 32) gegenüberliegend voneinander an den Wänden der Aussparung (20) bereitgestellt sind.

10. Tragbares elektronisches Gerät (10) umfassend ein Dateneingabegerät (14) nach einem der Ansprüche 1 bis 9.

11. Tragbares elektronisches Gerät (10) nach Anspruch 10, ferner umfassend eine Steuereinheit (34), die eingerichtet ist, um Orterfassungsdaten von dem Tastenerkennungsmechanismus (24) zu empfangen entsprechend dem Herunterdrücken des elektro-aktiven Polymers in einer Aussparung auf dem Tastenerkennungsmechanismus und Bereitstellen einer Spannung, die an den Elektroden des elektro-aktiven Polymer in der Aussparung angelegt werden soll, basierend auf diesem Herunterdrücken, um die Form des in Frage stehenden elektro-aktiven Polymers zu ändern.

12. Tragbares elektronisches Gerät (10) nach Anspruch 10 oder 11, wobei es ein tragbares Kommunikationsgerät ist.

13. Tragbares elektronisches Gerät (10) nach Anspruch 12, wobei es ein Mobiltelefon ist.

## Revendications

1. Dispositif de saisie de données (14), comprenant un mécanisme de détection des touches (24), le dispositif de saisie de données (14) étant **caractérisé en ce que** :
une couche de matériau massif (18) est placée directement au-dessus dudit mécanisme de détection des touches (24), dans lequel ladite couche de matériau massif (18) comprend au moins une cavité (20) traversant la totalité de ladite couche de matériau massif (18) ; et
dans lequel ladite cavité (20) comprend un polymère électroactif (28) et deux électrodes (30, 32) formant une touche (27) dont la forme peut être changée en fonction d'une tension appliquée et d'entrées de registre dans le mécanisme de détection des touches (24), lorsqu'un utilisateur appuie le polymère électroactif (28) sur le mécanisme de détection des touches (24).

2. Dispositif de saisie de données (14) selon la revendication 1, dans lequel le polymère électroactif (28) et le mécanisme de détection des touches (24) sont transparents.

3. Dispositif de saisie de données (14) selon la revendication 2, comprenant en outre un écran d'affichage (26) au-dessous dudit mécanisme de détection des touches.

4. Dispositif de saisie de données (14) selon l'une quelconque des revendications précédentes, dans lequel ladite couche de matériau massif (18) comprend un certain nombre de cavités, chacune contenant un polymère électroactif et des électrodes.

5. Dispositif de saisie de données (14) selon la revendication 4, dans lequel les cavités (20) sont implantées dans une structure et le mécanisme de détection des touches (24) est conçu pour détecter l'actionnement d'une touche en fournissant des données qui indiquent une position dans la structure, en fonction d'une pression exercée par le polymère électroactif (28) d'une cavité (20) dans une zone du mécanisme de détection des touches (24).

6. Dispositif de saisie de données (14) selon l'une quelconque des revendications précédentes, dans lequel le polymère électroactif (28) est un polymère électroactif ionique.

7. Dispositif de saisie de données (14) selon l'une quelconque des revendications précédentes, comprenant en outre une couche de protection élastique (16), au-dessus de ladite couche de matériau massif (18) et recouvrant ladite cavité (20).

8. Dispositif de saisie de données (14) selon l'une quelconque des revendications précédentes, dans lequel le polymère électroactif (28) est entouré d'un électrolyte (22) formé dans un gel.

9. Dispositif de saisie de données (14) selon l'une quelconque des revendications précédentes, dans lequel les électrodes (30, 32) sont implantées en face l'une de l'autre sur les parois de la cavité (20).

10. Dispositif électronique portatif (10), comprenant un dispositif de saisie de données (14) selon l'une quelconque des revendications 1 à 9.

11. Dispositif électronique portatif (10) selon la revendication 10, comprenant en outre une unité de commande (34) conçue pour recevoir en provenance du mécanisme de détection des touches (24) des données de détection de position qui correspondent à une pression exercée sur le polymère électroactif dans une cavité au-dessus du mécanisme de détection des touches et pour fournir une tension à appliquer aux électrodes du polymère électroactif dans une cavité, en fonction de cette pression exercée, afin de modifier la forme du polymère électroactif en question.

12. Dispositif électronique portatif (10) selon la revendication 10 ou 11, dans lequel celui-ci est un dispositif de communication mobile.

13. Dispositif électronique portatif (10) selon la revendication 12, dans lequel celui-ci est un téléphone cellulaire.
